(19) Europäisches Patentamt
European Patent Office
Office européen des brevets

(11) **EP 4 760 161 A1**

(12) **EUROPEAN PATENT APPLICATION**
published in accordance with Art. 153(4) EPC

(43) Date of publication:
**17.06.2026 Bulletin 2026/25**

(21) Application number: **24885258.4**

(22) Date of filing: **22.08.2024**

(51) International Patent Classification (IPC):
*F24H 1/00* (2022.01)    *F24H 1/18* (2022.01)
*F24H 15/215* (2022.01)    *F24H 15/219* (2022.01)
*F24H 15/258* (2022.01)    *F24H 15/31* (2022.01)
*F24H 15/335* (2022.01)    *F24S 50/80* (2018.01)
*F24S 90/00* (2018.01)

(52) Cooperative Patent Classification (CPC):
**F24H 1/00; F24H 1/18; F24H 15/215; F24H 15/219;
F24H 15/258; F24H 15/31; F24H 15/335;
F24S 50/80; F24S 90/00**

(86) International application number:
**PCT/JP2024/029813**

(87) International publication number:
**WO 2025/094481 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.11.2023 JP 2023188416**

(71) Applicant: **KABUSHIKI KAISHA KOBE SEIKO
SHO (KOBE STEEL, LTD.)
Hyogo 651-8585 (JP)**

(72) Inventors:
• SUGIMOTO, Akio
  Nishi-ku, Kobe-shi, Hyogo 651-2271 (JP)
• UEMATSU, Koji
  Nishi-ku, Kobe-shi, Hyogo 651-2271 (JP)
• KOBAYASHI, Manabu
  Nishi-ku, Kobe-shi, Hyogo 651-2271 (JP)
• FUJISAWA, Ryo
  Nishi-ku, Kobe-shi, Hyogo 651-2271 (JP)

(74) Representative: **TBK
Bavariaring 4-6
80336 München (DE)**

(54) **SOLAR LIGHT HEAT COLLECTION SYSTEM**

(57) A solar light heat collection system 1 comprises: a solar light heat collection panel 2 which has a non-heat insulation part 2c for performing convection heat transfer with ambient air, and transmits radiation heat from solar light and convection heat from the ambient air to a heat medium M; a heat medium circulation line 4 which sends the heat medium M from a heat medium tank 3 for storing the heat medium M to the solar light heat collection panel 2, and sends the heat medium M from the solar light heat collection panel 2 to the heat medium tank 3; a heat medium circulation control mechanism 5 which performs at least one of switching of the circulation availability of the heat medium M along the heat medium circulation line 4 and adjustment of the flow rate of the heat medium M; and a control device 9. The control device 9 measures the quantity Q1 of radiation heat input to the solar light heat collection panel 2, measures the quantity Q2 of convection heat transfer between the solar light heat collection panel 2 and the ambient air, and controls the heat medium circulation control mechanism 5 on the basis of the radiation heat input quantity Q1 and the convection heat transfer quantity Q2.

Fig. 1

**Description**

TECHNICAL FIELD

The present disclosure relates to a solar light heat collection system.

BACKGROUND ART

Patent Document 1 discloses a solar heat collection control device that feeds a heat transfer medium from a heat storage tank to a heat collector, that permits solar heat to warm up the heat transfer medium in the heat collector, and returns the heat transfer medium from the heat collector to the heat storage tank. The operation of a pump for circulating the heat transfer medium is switched on and off in accordance with temperature conditions inside devices such as the heat collector and the heat storage tank. For example, the pump is caused to operate when the temperature of the heat collector is higher than the temperature of the heat storage tank by a predetermined temperature or more, and when the temperature of a heat transfer medium return pipe is higher than the temperature of the heat storage tank by a predetermined temperature or more.

PRIOR ART DOCUMENT

PATENT DOCUMENT

Patent Document 1: JP S58-102062 A

SUMMARY OF THE INVENTION

PROBLEMS TO BE SOLVED BY THE INVENTION

In conventional solar light heat collection systems such as that described above, importance is placed on transferring the solar radiant heat to the heat transfer medium in a panel-shaped heat collector, and there is room for improvement in relation to the amount of heat gained by the heat collector.
An object of the present disclosure is to improve the amount of heat gained by a solar heat collection panel.

SOLUTIONS TO THE PROBLEMS

An aspect of the present disclosure provides a solar light heat collection system including: a solar heat collection panel that includes a hollow portion through which a heat transfer medium is circulated, a light-receiving unit that receives sunlight, and a non-insulated portion where convective heat transfer takes place with ambient air and that transfers solar radiant heat and convection heat from the ambient air to the heat transfer medium; a heat transfer medium tank that stores the heat transfer medium; a heat transfer medium circulation line that sends the heat transfer medium from the heat transfer medium tank to the solar heat collection panel, and that sends the heat transfer medium from the solar heat collection panel to the heat transfer medium tank; a heat transfer medium flow control mechanism that performs at least one of switching and adjusting, the switching being switching between permitting and prohibiting circulation of the heat transfer medium through the heat transfer medium circulation line, and the adjusting being adjusting a flow rate of the heat transfer medium; and a control device, configured to measure an amount of radiant heat input to the solar heat collection panel, measure an amount of convective heat transfer between the solar heat collection panel and the ambient air, and control the heat transfer medium flow control mechanism on a basis of the amount of radiant heat input and the amount of convective heat transfer.
Generally, solar heat collection panels have thermally insulated structures in order to prevent convective heat transfer with ambient air. By contrast, with the configuration described above, the solar heat collection panel actively includes a non-insulated portion intended to enable convective heat transfer with the ambient air. In this manner, the solar heat collection panel allows not only solar radiant heat but also convection heat from ambient air to be transferred to the heat transfer medium, so that a larger amount of heat is gained by the solar heat collection panel. Further, switching between permitting and prohibiting circulation of the heat transfer medium or adjusting the amount of the heat transfer medium to be circulated is performed on the basis of the amount of radiant heat input and the amount of convective heat transfer. Therefore, the heat recovery by the heat transfer medium is optimized.
Further, the amount of convective heat transfer may be negative when the convection heat is transferred from the solar heat collection panel to the ambient air, and the control device may control to cause the heat transfer medium flow control mechanism to stop feeding the heat transfer medium to the solar heat collection panel when the amount of convective heat transfer is negative and the amount of radiant heat input is less than an absolute value of the amount of convective heat transfer.
Here, in a case where the solar heat collection panel is provided with a non-insulated portion for gaining the convection heat from the ambient air, it is possible for the convection heat to escape from the solar heat collection panel to the ambient air, depending on the situation. By contrast, with the configuration described above, feeding of the heat transfer medium is stopped when the amount of convective heat transfer flowing out from the solar heat collection panel to the ambient air is more than the amount of radiant heat input being received by the solar heat collection panel. Therefore, it is possible to prevent a drop in the temperature of the heat transfer medium, and the heat recovery by the heat transfer medium can be optimized.
The control device may control to cause the heat transfer medium flow control mechanism to feed the heat transfer medium to the solar heat collection panel when the amount of convective heat transfer is negative and the amount of radiant heat input is greater than or equal to an absolute value of the amount of convective heat transfer.

With the configuration described above, the heat transfer medium is caused to circulate when the amount of convective heat transfer leaving the solar heat collection panel to the ambient air falls below the amount of radiant heat input being received by the solar heat collection panel. In this manner, the heat transfer medium can be heated with the amount of heat being gained by the solar heat collection panel.

The control device may control to cause the heat transfer medium flow control mechanism to feed the heat transfer medium to the solar heat collection panel when the amount of convective heat transfer is positive.

With the configuration described above, the heat transfer medium is caused to circulate when convection heat is being input to the solar heat collection panel from the ambient air. In this manner, the heat transfer medium can be heated with the amount of heat being gained by the solar heat collection panel.

The solar light heat collection system may further include a pyranometer that measures an amount of global solar radiation, and the control device may measure the amount of radiant heat input as an amount of heat per unit time, on a basis of the amount of global solar radiation measured by the pyranometer and a surface area of the light-receiving unit.

With the configuration described above, the amount of radiant heat input can be measured successively as the amount of heat per unit time, on the basis of the measurement result of the amount of global solar radiation that can change from moment to moment. Because switching between permitting and prohibiting circulation of the heat transfer medium or adjusting the amount of heat transfer medium to be circulated is performed on the basis of such an amount of radiant heat input, followability of control with respect to an environmental change such as a variation in the amount of cloud is improved, and heat recovery by the heat transfer medium can be easily optimized.

The solar light heat collection system may further include: an outdoor temperature sensor that measures a temperature of the ambient air around the solar heat collection panel; and a panel temperature sensor that measures a temperature in the solar heat collection panel, and the control device may measure the amount of convective heat transfer as an amount of heat per unit time, on a basis of a difference between the temperatures measured by the outdoor temperature sensor and the panel temperature sensor, an outer surface area of the non-insulated portion, and a convection heat transfer coefficient of the non-insulated portion.

With the configuration described above, the amount of convective heat transfer can be measured successively, as the amount of heat per unit time on the basis of the measurement results of the temperature difference that can change from moment to moment. Because switching between permitting and prohibiting circulation of the heat transfer medium or adjusting the amount of heat transfer medium to be circulated is performed on the basis of the amount of convective heat transfer, followability of control with respect to an environmental change such as a variation in the temperature is improved, and heat recovery by the heat transfer medium can be easily optimized.

The panel temperature sensor may include at least one of a surface temperature sensor that measures a surface temperature of the non-insulated portion, an inlet temperature sensor that measures a temperature near an inlet of the hollow portion, and an outlet temperature sensor that measures a temperature near an outlet of the hollow portion.

With the configuration described above, the panel temperature can be measured accurately.

The heat transfer medium tank may include a first heat transfer medium tank and a second heat transfer medium tank that is separate from the first heat transfer medium tank, and the heat transfer medium circulation line may include an inflow line that sends the heat transfer medium from the first heat transfer medium tank to the hollow portion, and an outflow line that sends the heat transfer medium from the hollow portion to the second heat transfer medium tank.

With the configuration described above, because the heat transfer medium being fed to the solar heat collection panel can be kept at a temperature lower than the temperature of the solar heat collection panel, and a large temperature difference can be maintained during the time of heat collection, it is possible to keep the amount of heat transfer from the solar heat collection panel to the heat transfer medium large, and as a result, to increase the amount of heat gained by the solar heat collection panel, and stored in the second tank.

The heat transfer medium circulation line may further include a return line that branches out from the outflow line and via which the heat transfer medium is returned to the first heat transfer medium tank, and the heat transfer medium flow control mechanism may include a direction switching mechanism that switches between a state for sending the heat transfer medium to the second heat transfer medium tank via the outflow line and a state for returning the heat transfer medium to the first heat transfer medium tank via the return line.

In the configuration described above, when the heat transfer medium from the first heat transfer medium tank is passed through the solar heat collection panel and returned to the first heat transfer medium tank, it is possible to raise the temperature of the heat transfer medium in the first heat transfer medium tank, and to obtain a high-temperature heat transfer medium. When the heat transfer medium from the first heat transfer medium tank is passed through the solar heat collection panel and sent to the second heat transfer medium tank, it is possible to maximize the amount of collected heat, although the heat transfer medium temperature cannot be increased as compared with the case of returning the heat transfer medium temperature to the first heat transfer medium tank.

The heat transfer medium tank may be a stratified tank having an outlet provided to a lower part and an inlet provided to an upper part, and the heat transfer medium circulation line may include an inflow line connecting the outlet of the heat transfer medium tank to the hollow portion and an outflow line connecting the hollow portion to the inlet of the heat transfer medium tank.

With the configuration described above, it is possible to keep the amount of collected heat large, without increasing the number of heat transfer medium tanks.

EFFECTS OF THE INVENTION

According to the present disclosure, it is possible to increase the amount of heat gained by a solar heat collection panel.

BRIEF DESCRIPTION OF THE DRAWINGS

[Fig. 1] Fig. 1 is a schematic diagram illustrating an overall configuration of a solar light heat collection system according to a first embodiment.
[Fig. 2A] Fig. 2A is a perspective view of a solar heat collection panel.
[Fig. 2B] Fig. 2B is an exploded perspective view of the solar heat collection panel.
[Fig. 2C] Fig. 2C is a cross-sectional view of the solar heat collection panel.
[Fig. 3] Fig. 3 is a schematic diagram illustrating a relevant part of the solar light heat collection system according to the first embodiment.
[Fig. 4] Fig. 4 is a flowchart illustrating processing executed by a control device.
[Fig. 5] Fig. 5 is a graph illustrating temporal changes in the amount of radiant heat input, an outdoor temperature, and a panel temperature.
[Fig. 6] Fig. 6 is a schematic diagram of a solar light heat collection system according to a second embodiment.
[Fig. 7] Fig. 7 is a schematic diagram of a solar light heat collection system according to a third embodiment.
[Fig. 8] Fig. 8 is a schematic diagram of a solar light heat collection system according to a fourth embodiment.

DETAILED DESCRIPTION

Embodiments will now be explained with reference to drawings. Note that the same or corresponding elements are denoted by the same reference numerals throughout the drawings, and redundant detailed descriptions will be omitted hereunder.

(First Embodiment)

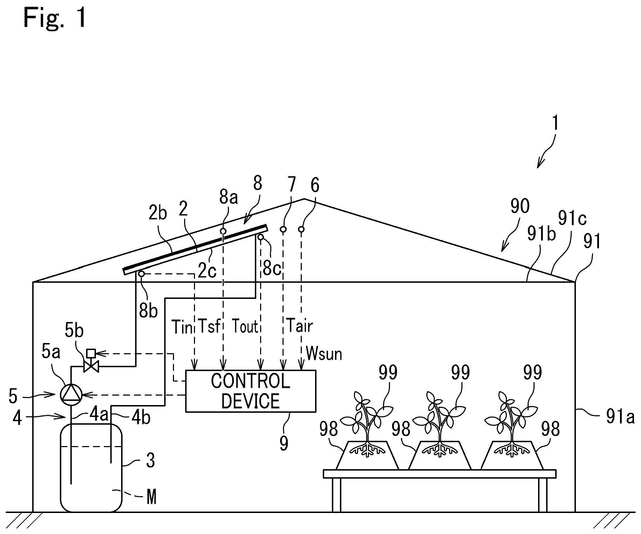

Referring to Fig. 1, a solar light heat collection system 1 according to a first embodiment includes a solar heat collection panel 2, a heat transfer medium tank 3, a heat transfer medium circulation line 4, and a heat transfer medium flow control mechanism 5.

The solar heat collection panel 2 has a flat plate shape, and forms a channel through which liquid-phase heat transfer medium M is passed. The heat transfer medium tank 3 stores therein the heat transfer medium M. The heat transfer medium M is, for example, water. As the heat transfer medium M, it is also possible to use a liquid other than water, such as an antifreeze liquid containing ethylene glycol as a main component.

In this embodiment, the heat transfer medium tank 3 is a single body. The heat transfer medium circulation line 4 includes an inflow line 4a via which the heat transfer medium M is sent from the heat transfer medium tank 3 to the solar heat collection panel 2, and an outflow line 4b via which the heat transfer medium M is sent from the solar heat collection panel 2 to the heat transfer medium tank 3.

The heat transfer medium tank 3 has a thermally-insulated structure, and can manage the temperature of the heat transfer medium M inside the heat transfer medium tank 3 so as to be maintained at a required temperature regardless of the ambient temperature. The inflow line 4a and the outflow line 4b are formed of piping members such as pipes made of metal or resin. These piping members may also have a thermally insulated structure.

The heat transfer medium flow control mechanism 5 performs at least one of switching between permitting and prohibiting the circulation of the heat transfer medium M through the heat transfer medium circulation line 4, and adjusting the flow rate of the heat transfer medium M in the heat transfer medium circulation line 4. In this embodiment, the heat transfer medium flow control mechanism 5 is enabled to perform both of the switching and the adjusting.

The heat transfer medium flow control mechanism 5 may include a pump 5a that pressure-feeds the heat transfer medium M into the heat transfer medium circulation line 4, and a valve 5b disposed in the heat transfer medium circulation line 4. In the illustrated example, the pump 5a and the valve 5b are disposed in the inflow line 4a, but it is also possible for the pump 5a to be provided to the heat transfer medium tank 3, and for the valve 5b to be disposed in the outflow line 4b.

In this embodiment, as an example, the pump 5a is a metering pump, and the valve 5b is a flow regulator valve. Switching between permitting and prohibiting the circulation of the heat transfer medium M is implemented by switching the pump 5a between the operative state and the inoperative state. The flow rate of the heat transfer medium M is adjusted by adjusting the degree by which the valve 5b is opened. However, this is an example, and in a case where the valve 5b is an on-off valve, switching between permitting and prohibiting the passage of the heat transfer medium M may be implemented by switching the valve 5b to open and to close. In a case where the pump 5a is a variable displacement pump, by adjusting the volume of the pump 5a, the discharged amount of the heat transfer medium M can be adjusted, so that the adjustment of the flow rate becomes possible.

The heat transfer medium M is pumped out by the pump 5a, from the heat transfer medium tank 3, and is sent into the solar heat collection panel 2 via the inflow line 4a. As the heat transfer medium M passes through the inside of the solar heat collection panel 2, the heat transfer medium M becomes heated by the heat collected by the solar heat collection panel 2. The heat transfer medium M flowed out of the solar heat collection panel 2 is sent into the heat transfer medium tank 3 via the outflow line 4b. Consequently, hot water is stored in the heat transfer medium tank 3.

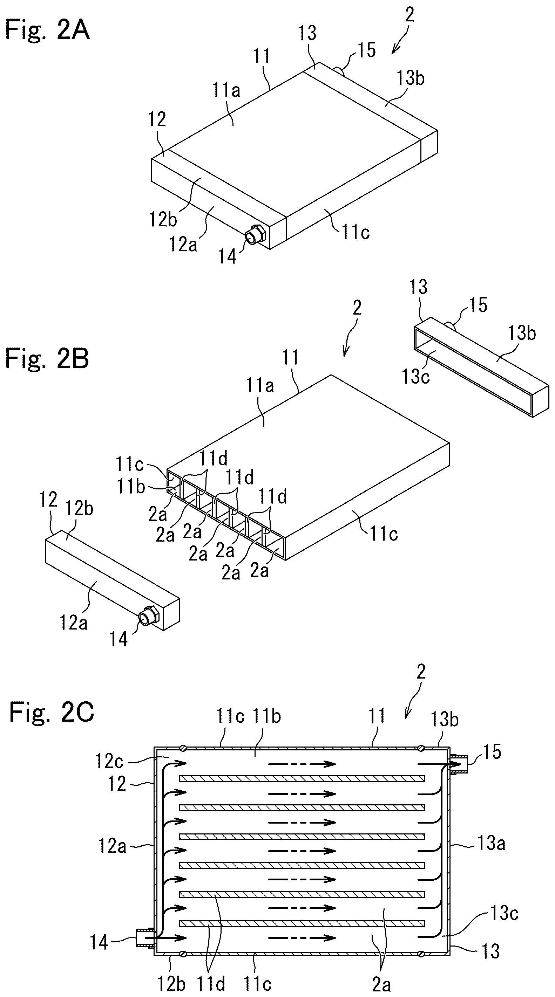

A structure of the solar heat collection panel 2 will now be described with reference to Figs. 2A to 2C. The solar heat collection panel 2 includes a panel body 11, a first header 12, a second header 13, an inlet 14, and an outlet 15.

The panel body 11 is an extruded aluminum-alloy member. Suitable aluminum alloys include 1000 series, with an excellent thermal conductivity, or 6000 series, with an excellent thermal conductivity as well as strength.

The panel body 11 includes a first main wall 11a, a second main wall 11b, and a pair of side walls 11c. The first main wall 11a, the second main wall 11b, and the pair of side walls 11c form a wide and elongated low-profile rectangular tube, and both ends of the rectangular tube in the longitudinal direction are open. This longitudinal direction corresponds to the extrusion direction. The first main wall 11a is a rectangular flat plate. The long sides thereof extend along the longitudinal direction of the panel body 11, the short sides thereof extend in the width direction of the panel body 11, and the thickness direction of this plate corresponds to the height direction of the panel body 11. The pair of side walls 11c is provided in a manner standing upright from the respective side edges of the first main wall 11a. The second main wall 11b is a flat plate having the same shape as the first main wall 11a, is disposed in parallel with the first main wall 11a, overlaps completely with the first main wall 11a in a view in the plate thickness direction, and connects the edges of the pair of side walls 11c to each other. These four walls define wide and low-profile rectangular openings on the respective ends in the longitudinal direction.

The panel body 11 has a plurality of partitioning walls 11d. The plurality of partitioning walls 11d extend between the pair of side walls 11c, in parallel with the side walls 11c, and connect the inner surface of the first main wall 11a and the inner surface of the second main wall 11b. The partitioning walls 11d divide the space surrounded by the four walls described above, into a plurality of hollow portions 2a that are arranged along the width direction.

In the illustrated example, the number of partitioning walls 11d is six, and the number of hollow portions 2a is seven, which is one more than the number of partitioning walls 11d, but the number of hollow portions 2a may be changed as appropriate. Each of the hollow portions 2a has a rectangular cross section. With the use of extrusion molding, a structure having such a plurality of closed cross sections or a plurality of hollow portions 2a, as described above, can be integrally manufactured, continuously. In the illustrated example, the first main wall 11a, the second main wall 11b, and the pair of side walls 11c are flat; however, it is also possible for the first main wall 11a, the second main wall 11b, and the pair of side walls 11c not to be flat, and to have some recesses and protrusions, as long as the hollow portions are formed inside. It is also possible for a plurality of projections (fins) to be provided to at least one surface of the first main wall 11a, the second main wall 11b, and the pair of side walls 11c. By providing protrusions and recesses or fins, a light-receiving area and a contact area with the air are increased, so that it is possible to increase the amount of radiant heat input and the amount of convective heat transfer.

Each of the hollow portions 2a has opening on the respective ends in the longitudinal direction. The first header 12 closes the openings on one end of the hollow portions 2a. The second header 13 closes the openings on the other end of the hollow portions 2a. Both of the first header 12 and the second header 13 close the entire openings of the plurality of hollow portions 2a.

The first header 12 includes a lid plate 12a, a peripheral wall 12b that is provided in manner standing upright from the perimeter of the lid plate 12a, and an inner space 12c that is surrounded by the lid plate 12a and the peripheral wall 12b. The inner space 12c opens to the outside, on the opposite side of the lid plate 12a. The inner space 12c has a cross section (a cross section delineated by the inner peripheral surface of the peripheral wall 12b) having the same shape (a rectangular shape, in this embodiment) as the cross section delineated by the outer peripheral surface of the panel body 11. The first header 12 is in contact with one end of the panel body 11, and is liquid-tightly bonded to the panel body 11.

The same applies to the other end in the longitudinal direction. The second header 13 has a lid plate 13a, a peripheral wall 13b, and an inner space 13c, similarly to the first header 12, and is attached to the other end of the panel body 11 in the longitudinal direction, similarly to the first header 12.

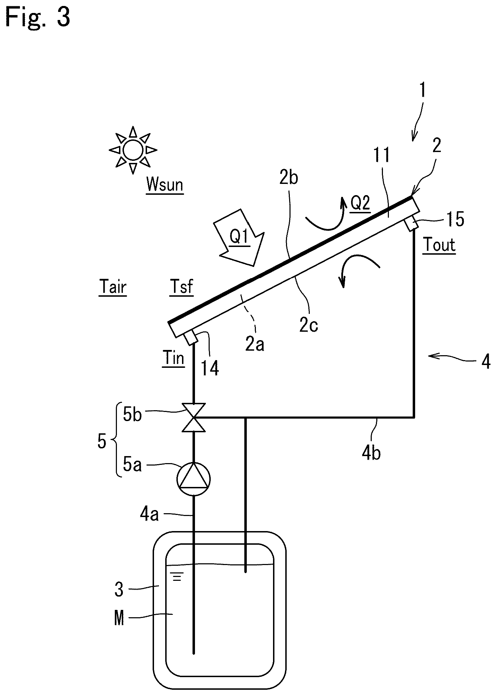

The inlet 14 and the outlet 15 are provided to the first header 12 or the second header 13. The inlet 14 is connected to the inflow line 4a (see Figs. 1 and 3), and the outlet 15 is connected to the outflow line 4b (see Figs. 1 and 3). The inlet 14 has a tubular shape or a nipple-like shape, and the inflow line 4a serving as a piping member is liquid-tightly attached to the inlet 14. The same applies to the outlet 15 and the outflow line 4b.

In this embodiment, a single inlet 14 is provided to the first header 12, and a single outlet 15 is provided to the second header 13. The inlet 14 and the outlet 15 penetrate the lid plate 12a and the lid plate 13a, respectively. The heat transfer medium M flows through the inlet 14 into the inner space 12c of the first header 12, and is further diverted from the inner space 12c into each of the plurality of hollow portions 2a. The heat transfer medium M from each of the plurality of hollow portions 2a merges into the inner space 13c of the second header 13, and further flows out of the inner space 13c through the outlet 15.

As described above, the heat transfer medium M flows through the solar heat collection panel 2 in one direction, from one side to the other side in the longitudinal direction. The heat transfer medium M circulates through the hollow portions 2a in a state filling the hollow portions 2a, that is, in a state coming into contact with the walls of the panel body 11 defining the hollow portions 2a and the inner surface thereof.

Referring to Fig. 3, the solar heat collection panel 2 includes a light-receiving unit 2b that receives the sunlight. The solar heat collection panel 2 transfers the solar radiant heat to the heat transfer medium M. The solar heat collection panel 2 also actively includes a non-insulated portion 2c intended to enable convective heat transfer with the ambient air. While convection heat is being transferred from the ambient air to the solar heat collection panel 2, the convection heat is transferred to the heat transfer medium M via the solar heat collection panel 2. The radiant heat and the convection heat are transferred to the heat transfer medium M via the solid heat transfer of the panel body 11, and heat the heat transfer medium M.

The amount of heat gain Q to be gained by the solar heat collection panel 2 per unit time may be defined as the sum of the amount of radiant heat input Q1 and the amount of convective heat transfer Q2 (Q=Q1+Q2). The temperature of the heat transfer medium M rises in a section from the inlet 14 to the outlet 15, by a temperature increase that is dependent on the amount of heat gain Q and the flow rate of the heat transfer medium M.

"The amount of radiant heat input Q1" can be defined as the amount of solar radiant heat (W) input to the solar heat collection panel 2 (the light-receiving unit 2b, in particular) per unit time. The amount of radiant heat input Q1 is expressed as following formula (1).

$$Q1 = \alpha W sun A sun \quad (1)$$

Where $\alpha$ denotes the emissivity (dimensionless) of the surface of the solar heat collection panel 2, more specifically, the emissivity of the light-receiving unit 2b. Wsun denotes the amount of global solar radiation $(W/m^2)$. Asun denotes the light-receiving area $(m^2)$ of the solar heat collection panel 2, more specifically, denotes the surface area of the light-receiving unit 2b (hereinafter, simply referred to as a light-receiving area Asun).

The entire or a part of the outer surfaces of the first main wall 11a, the second main wall 11b, the pair of side walls 11c, the first header 12, and the second header 13 serves as the light-receiving unit 2b. The surface of the light-receiving unit 2b is painted black. With this, the emissivity $\alpha$ of the light-receiving unit 2b takes a value near 1, so that the heat collection ratio of the solar heat collection panel 2 is improved. Because the emissivity of the aluminum alloy is a value on the order of $10^{-2}$ to $10^{-1}$, the effect of the painting is prominent when the panel body 11 is made of an aluminum alloy. The heat collection ratio is a dimensionless value calculated by dividing the amount of solar heat gain per unit area, by the amount of global solar radiation Wsun. A heat collection ratio nearer to 1 indicates a higher heat collection efficiency.

"The amount of convective heat transfer Q2" may be defined as the amount of convection heat (W) exchanged between the ambient air and the solar heat collection panel 2 (in particular, the non-insulated portion 2c), per unit time. The amount of convective heat transfer Q2 is expressed as following formula (2).

$$Q2 = \mu (Tair - Tp) Ap \quad (2)$$

Where $\mu$ is the convection heat transfer coefficient $(W/K \cdot m^2)$ of the solar heat collection panel 2, more specifically, the convection heat transfer coefficient of the non-insulated portion 2c. Tair is the temperature (K) of the ambient air near the solar heat collection panel 2 (hereinafter, referred to as an outdoor temperature Tair). Tp is a temperature (K) of the solar heat collection panel 2 (hereinafter, referred to as a panel temperature Tp). Ap is the outer surface area $(m^2)$ of the solar heat collection panel 2, more specifically, the outer surface area of the non-insulated portion 2c (hereinafter, simply referred to as an outer surface area Ap).

The heat transfer medium M comes into contact with the inner surfaces of the walls defining the hollow portions 2a. Substantially the entirety of the inner surfaces of the first main wall 11a, the second main wall 11b, the pair of side walls 11c, the first header 12, and the second header 13 is in contact with the heat transfer medium M, and substantially the entirety of the outer surfaces of these elements are in contact with ambient air. In this embodiment, no heat insulating material is provided to the inner surfaces and the outer surfaces. Therefore, substantially the entire four walls and headers 12 and 13 forming the panel body 11 can serve as the non-insulated portion 2c.

As expressed as formula (2) mentioned above, the amount of convective heat transfer Q2 is proportional to the temperature difference between the outdoor temperature Tair and the panel temperature Tp. The amount of convective heat transfer Q2 becomes positive when the outdoor temperature Tair is higher than the panel temperature Tp. The convection heat then transfers from the ambient air to the solar heat collection panel 2 (in particular, the non-insulated portion 2c). By contrast, the amount of convective heat transfer Q2 becomes negative when the panel temperature Tp is higher than the outdoor temperature Tair. The convection heat then transfers from the solar heat collection panel 2 (in particular, the non-insulated portion 2c) to the ambient air.

The emissivity $\alpha$, the light-receiving area Asun, the convection heat transfer coefficient $\mu$, and the outer surface area Ap are determined on the basis of the design specifications of the solar heat collection panel 2. These parameters can be handled as constants during a design phase and an implementation phase of the solar heat collection panel 2. By contrast, the amount of global solar radiation Wsun, the outdoor temperature Tair, and the panel temperature Tp change from moment to moment. To calculate the amount of radiant heat input Q1 and the amount of convective heat transfer Q2, therefore, it is necessary to measure these parameters in real time.

Returning to Fig. 1, the solar light heat collection system 1 further includes a pyranometer 6, an outdoor temperature sensor 7, and a panel temperature sensor 8. The pyranometer 6 is installed near the light-receiving unit 2b, and measures the amount of global solar radiation Wsun. The outdoor temperature sensor 7 is provided outside the solar heat collection panel 2 and near the solar heat collection panel 2, and measures or detects the outdoor temperature Tair. The panel temperature sensor 8 is provided on a surface of or internal of the solar heat collection panel 2, and measures or detects the panel temperature Tp.

The panel temperature sensor 8 includes at least one of a surface temperature sensor 8a, an inlet temperature sensor 8b, and an outlet temperature sensor 8c. The surface temperature sensor 8a measures a surface temperature of the solar heat collection panel 2, in particular, a temperature of the outer surface of the non-insulated portion 2c (hereinafter, referred to as a surface temperature Tsf). The inlet temperature sensor 8b measures a temperature of the solar heat collection panel 2 near the inlet 14 of the heat transfer medium M (hereinafter, referred to as an inlet temperature Tin). The outlet temperature sensor 8c measures a temperature of the solar heat collection panel 2 near the outlet 15 of the heat transfer medium M (hereinafter, referred to as an outlet temperature Tout). The inlet temperature Tin may be a temperature of the inner surface of the solar heat collection panel 2 near the inlet 14 or a temperature of the heat transfer medium M flowing near the inlet 14. The same applies to the outlet temperature Tout.

One of the surface temperature Tsf, the inlet temperature Tin, and the outlet temperature Tout may be handled as the panel temperature Tp. The panel temperature Tp may be an average of two or more of the surface temperature Tsf, the inlet temperature Tin, and the outlet temperature Tout. The surface temperature Tsf may be measured at a plurality of measurement points of one solar heat collection panel 2. In such a case, an average of the measurement results of the plurality of surface temperatures Tsf may be handled as a single measurement result of the surface temperature Tsf.

The solar light heat collection system 1 further includes a control device 9. The control device 9 is connected to the pyranometer 6, the outdoor temperature sensor 7, and the panel temperature sensor 8, and acquires the measurement results from these measurement elements successively, at predetermined sampling intervals. The control device 9 is connected to the heat transfer medium flow control mechanism 5, and controls the heat transfer medium flow control mechanism 5 on the basis of the measurement results. In other words, the control device 9 controls to permit or to prohibit the circulation of the heat transfer medium M through the heat transfer medium circulation line 4, or controls the flow rate of the heat transfer medium M in the heat transfer medium circulation line 4, on the basis of the measurement results.

The control device 9 includes, for example, a central processing unit (CPU) or a micro-processing unit (MPU) that implements a predetermined function in cooperative association with software. The control device 9 may be implemented as a hardware circuit such as a dedicated electronic circuit or a reconfigurable electronic circuit designed to implement a predetermined function, or may be implemented using various semiconductor integrated circuits. Examples of the various semiconductor integrated circuits include a microcomputer, a digital signal processor (DSP), a field-programmable gate array (FPGA), and an application-specific integrated circuit (ASIC), as well as a CPU and an MPU. Furthermore, the control device 9 may include a storage device such as a random access memory (RAM) and a read-only memory (ROM). Specifically, the control device 9 may be configured as an information processing device such as a desktop personal computer, a notebook computer, a workstation, or a tablet terminal, or as a printed circuit board or the like having functions equivalent thereto, for example.

The storage device of the control device 9 stores therein a program and information for executing processing to be described below. Examples of the information stored in advance in the storage device include numerical values representing the emissivity $\alpha$, the light-receiving area Asun, the convection heat transfer coefficient $\mu$, and the outer surface area Ap.

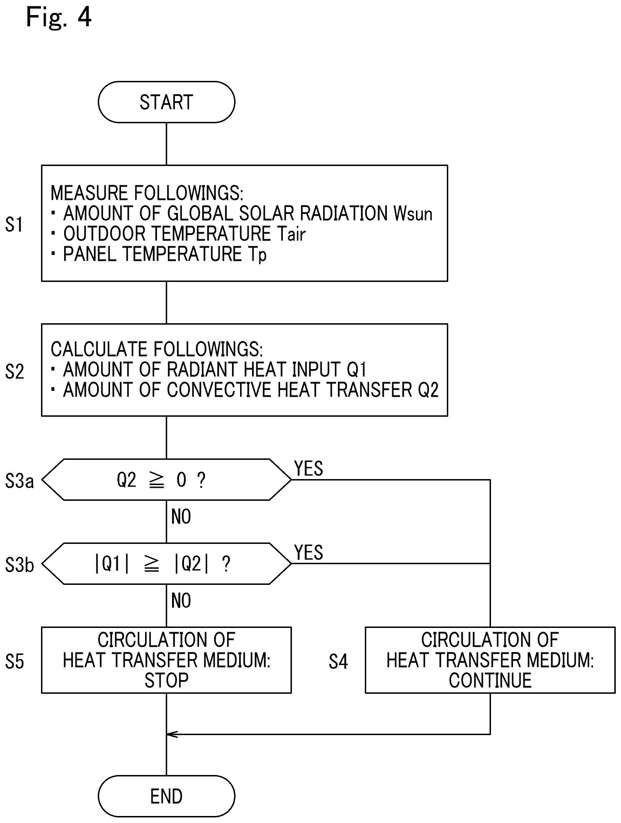

Fig. 4 illustrates the sequence of processing performed by the control device 9. The control device 9 executes the processing following the illustrated sequence repeatedly, at predetermined control intervals.

The control device 9 acquires measurement results of the amount of global solar radiation Wsun output from the pyranometer 6, the outdoor temperature Tair output from the outdoor temperature sensor 7, and the panel temperature Tp output from the panel temperature sensor 8 (step S1). The panel temperature Tp may be the surface temperature Tsf itself, the inlet temperature Tin itself, the outlet temperature Tout itself, or may be calculated on the basis of a plurality of these temperatures, as having been described above. The control device 9 may set the acquired measurement result as the panel temperature Tp, or may arithmetically obtain the measurement result of the panel temperature Tp from a plurality of types of acquired measurement results.

The control device 9 then calculates the amount of radiant heat input Q1 on the basis of formula (1) mentioned above (step S2). The emissivity $\alpha$ and the light-receiving area Asun to be used as factors in formula (1) may be read from the storage device.

The control device 9 calculates the amount of convective heat transfer Q2 following formula (2) mentioned above, on the basis of the temperature difference between the measured outdoor temperature Tair and panel temperature Tp (step S2). The convection heat transfer coefficient $\mu$ and the outer surface area Ap to be used as factors in formula (2) may be read from the storage device.

The control device 9 then determines whether the measured amount of convective heat transfer Q2 is zero or positive (step S3a). If the amount of convective heat transfer Q2 is negative (S3a: NO), it is further determined whether the absolute value of the amount of radiant heat input Q1 is greater than or equal to the absolute value of the amount of convective heat transfer Q2 (step S3b).

If the amount of convective heat transfer Q2 is zero or positive (S3a: YES), the control device 9 controls to cause the heat transfer medium flow control mechanism 5 to keep the heat transfer medium M circulating (step S4). The processing is also shifted to step S4 when the amount of convective heat transfer Q2 is negative (S3a: NO) and the absolute value of the amount of radiant heat input Q1 is greater than or equal to the absolute value of the amount of convective heat transfer Q2 (S3b: YES), too. To keep the heat transfer medium M circulating, the control device 9 keeps the pump 5a operating, and keeps the opening ratio of the valve 5b to a predetermined opening ratio or higher, for example.

If the amount of convective heat transfer Q2 is negative (S3a: NO) and the absolute value of the amount of radiant heat input Q1 is less than the absolute value of the amount of convective heat transfer Q2 (S3b: NO), the control device 9 controls to cause the heat transfer medium flow control mechanism 5 to stop the circulation of the heat transfer medium M (step S5). In order to stop the circulation of the heat transfer medium M, the control device 9 stops the pump 5a, and fully closes the opening of the valve 5b, for example.

Here, the amount of radiant heat input Q1 is proportional to the amount of global solar radiation Wsun. Because the amount of global solar radiation Wsun cannot be negative, the amount of radiant heat input Q1 is also either zero or positive. If the amount of convective heat transfer Q2 is zero or positive (S3a: YES), the amount of heat gain Q is therefore either zero or positive. Even if the amount of convective heat transfer Q2 is negative, the amount of heat gain Q remains positive if the absolute value of the amount of convective heat transfer Q2 is less than the amount of radiant heat input Q1 (or its absolute value) (S3b: YES). As described above, when the amount of heat gain Q is zero or positive, the heat transfer medium M is kept circulating (step S4).

By contrast, the amount of heat gain Q becomes negative when the amount of convective heat transfer Q2 is negative and the absolute value of the amount of convective heat transfer Q2 is greater than the amount of radiant heat input Q1 (or the absolute value thereof) (S3b: NO). If the heat transfer medium M is passed through the solar heat collection panel 2 in such a case, the temperature of the heat transfer medium M may drop. When the amount of heat gain Q is negative, the circulation of the heat transfer medium M is stopped (step S5), so that a drop in the temperature of the heat transfer medium M is prevented proactively.

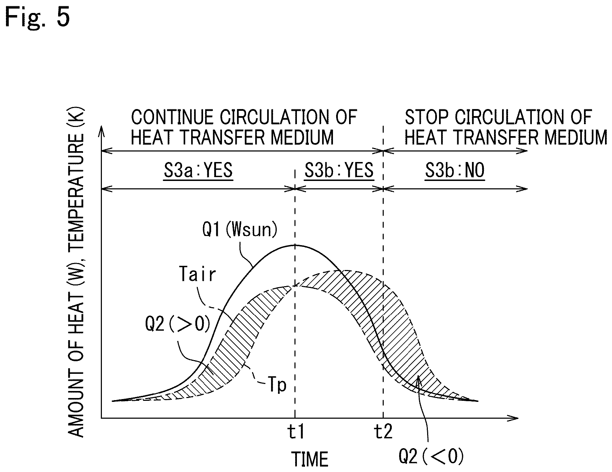

Fig. 5 illustrates temporal changes in the amount of radiant heat input Q1, the outdoor temperature Tair, and the panel temperature Tp from a time point before sunrise to a time point after sunset, on a day with a clear sky throughout the day. The horizontal axis represents time. The vertical axis represents the amount of heat (W) per unit time or temperature (K) with a scale in an arbitrary unit.

The amount of radiant heat input Q1 is proportional to the amount of global solar radiation Wsun. Therefore, the amount of global solar radiation Wsun changes similarly to the amount of radiant heat input Q1, not illustrated, as the time elapses. The amount of convective heat transfer Q2 depends on the temperature difference between the outdoor temperature Tair and the panel temperature Tp. Therefore, when the temperature difference (the difference between the outdoor temperature Tair and the panel temperature Tp at the same time in the vertical axis coordinates) increases, the absolute value of the amount of convective heat transfer Q2 also increases. When the outdoor temperature Tair is higher than the panel temperature Tp (see the right-downward hatched area), the amount of convective heat transfer Q2 is positive. When the outdoor temperature Tair is lower than the panel temperature Tp (see the right-upward hatched area), the amount of convective heat transfer Q2 is negative.

The amount of radiant heat input Q1 and the amount of global solar radiation Wsun mark maximum values at the time of culmination, and shift line-symmetrically with respect to the time of culmination. This is because a day on which the sky is clear throughout the day is used as an example, and the amount of radiant heat input Q1 and the amount of global solar radiation Wsun can change in a complicated manner depending on the amount of cloud.

The outdoor temperature Tair also changes in a manner similar to the amount of global solar radiation Wsun, and takes a maximum value near the culmination. By contrast, the panel temperature Tp takes a maximum value at a time later than the culmination. After the sunrise, the panel temperature Tp rises toward the maximum value, but transitions at a level below the outdoor temperature Tair. The panel temperature Tp becomes higher than the outdoor temperature Tair at time t1, in the process of rising toward the maximum value. The time t1 is around the culmination. After reaching the maximum value, the panel temperature Tp decreases while maintaining a temperature level above the outdoor temperature Tair.

During the time period prior to the time t1, because the amount of convective heat transfer Q2 is positive, the heat transfer medium M is kept circulating, thereby raising the temperature of the heat transfer medium M in the heat transfer medium tank 3. The amount of convective heat transfer Q2 switches from positive to negative at the time t1. Immediately after the time t1, there is only a small temperature difference, and the amount of convective heat transfer Q2 has a small absolute value. Meanwhile, there is sufficient solar radiation because the time t1 is near the time of culmination. The amount of radiant heat input Q1 then becomes much larger than the absolute value of the amount of convective heat transfer Q2, and the amount of heat gain Q becomes positive. Therefore, even if the amount of convective heat transfer Q2 turns negative, the heat transfer medium M is kept circulating, and the amount of heat gain Q is kept being recovered by the heat transfer medium M.

The temperature difference keeps increasing until around the time at which the panel temperature Tp reaches the maximum value. As the sunset approaches, the amount of global solar radiation Wsun and the amount of radiant heat input Q1 become much less, while the temperature difference having increased once remains without decreasing. At time t2 at which the amount of radiant heat input Q1 reaches the absolute value of the amount of convective heat transfer Q2, the amount of heat gain Q switches from positive to negative. At the time t2, the circulation of the heat transfer medium M is stopped so as to prevent a temperature decrease of the heat transfer medium M in the time period subsequent to the time t2, proactively.

In the solar light heat collection system 1 according to this embodiment, the solar heat collection panel 2 actively includes the non-insulated portion 2c intended to enable convective heat transfer with the ambient air. Therefore, the solar heat collection panel 2 allows not only the solar radiant heat but also the convection heat from the ambient air to be transferred to the heat transfer medium M, so that the amount of heat gain Q in the solar heat collection panel 2 is increased. Further, switching between permitting and prohibiting circulation of the heat transfer medium M or adjusting the amount of the heat transfer medium M to be circulated is executed on the basis of the amount of radiant heat input Q1 and the amount of convective heat transfer Q2. Therefore, the heat recovery by the heat transfer medium M is optimized.

Specifically, the control device 9 controls to cause the heat transfer medium flow control mechanism 5 to stop the supply of the heat transfer medium M to the solar heat collection panel 2 when the amount of convective heat transfer Q2 is negative, and the amount of radiant heat input Q1 is less than the absolute value of the amount of convective heat transfer Q2. With this, the supply of the heat transfer medium is stopped when the amount of convective heat transfer Q2 in the direction leaving the solar heat collection panel 2 to the ambient air exceeds the amount of radiant heat input Q1 received by the solar heat collection panel 2. That is, because the supply of the heat transfer medium M is stopped when the amount of heat gain Q is negative, it is possible to prevent the solar heat collection panel 2 from decreasing the temperature of the heat transfer medium M.

By contrast, even if the amount of convective heat transfer Q2 is negative, as long as the amount of radiant heat input Q1 is greater than or equal to the absolute value of the amount of convective heat transfer Q2, the control device 9 controls to cause the heat transfer medium flow control mechanism 5 to supply the heat transfer medium M to the solar heat collection panel 2. Accordingly, as long as the amount of heat gain Q is positive, the heat transfer medium M can recover that amount of heat gain.

The amount of radiant heat input Q1 is measured successively, as the amount of heat per unit time, on the basis of the measurement results of the amount of global solar radiation Wsun that can change from moment to moment. The amount of convective heat transfer Q2 is measured successively as the amount of heat per unit time, on the basis of the measurement results of the temperature difference between the outdoor temperature Tair and the panel temperature Tp that can also change from moment to moment. The amount of heat gain Q is also evaluated as the amount of heat per unit time, on the basis of the amount of radiant heat input Q1 and the amount of convective heat transfer Q2. Therefore, the followability of control with respect to environmental changes can be improved, and heat recovery by the heat transfer medium M can be optimized. For example, the pump 5a can be stopped immediately in response to a sudden increase of cloud or a sudden increase in outdoor temperature, so that heat loss from the heat transfer medium M can be prevented.

Returning to Fig. 1, the heat recovered by the heat transfer medium M in this manner may be used in a greenhouse 90. The greenhouse 90 is a preferred application example of the solar light heat collection system 1 according to this embodiment.

The greenhouse 90 is built on a substantially horizontal site having a rectangular shape. The greenhouse 90 has a framework 91 formed of steel members or extruded aluminum members. The entire framework 91 is covered with an outer skin (not illustrated) formed of a light transmissive material (polyvinyl chloride, for example). With this, the interior of the greenhouse 90 is protected from wind and rain. The framework 91 includes posts 91a erected at and between the four corners of the site, girders and beams 91b laterally stretched across the upper ends of the posts 91a, and a roof 91c provided above the girders and beams 91b. The shape of the roof is not limited to any particular shape, and is a gable or an arch shape, for example. In the greenhouse 90, a plant 99 is planted in a growing medium 98. The plant 99 is preferably a crop. The medium 98 is a growing medium for the plant 99, and is selected from soil, rock wool, a culture solution, and the like, as appropriate, in consideration of compatibility with the plant 99 to be grown.

The solar light heat collection system 1 is used for assisting the growth of the plant 99. The temperatures of the growing medium 98 and the plant 99 may be adjusted using the heat recovered by the heat transfer medium M. In this case, the solar heat collection panel 2 is preferably installed immediately below the roof 91c of the greenhouse 90 (inside the greenhouse 90) in such a manner that the light-receiving unit 2b faces the south. Because the roof is transparent and the air in the greenhouse 90 is heated by the sunlight, the solar heat collection panel 2 can collect the heat resulting from the convective heat with the heated air inside the greenhouse 90, in addition to the radiant heat input from the sunlight passing through the transparent roof. Because the heat transfer medium tank 3 is disposed inside the greenhouse 90, the air inside the greenhouse 90 can exert the heat-insulating effect. Although the tank may be disposed outside the greenhouse 90, in such a case, the tank structure needs to have a higher heat-insulating property than that installed inside the greenhouse 90. Even with the solar heat collection panel 2 installed on a rooftop or a wall surface of an architectural structure such as a building, it is possible to achieve a similar effect, and to collect the convective heat as well as the radiant heat from the building structure heated by the sunlight.

(Second Embodiment)

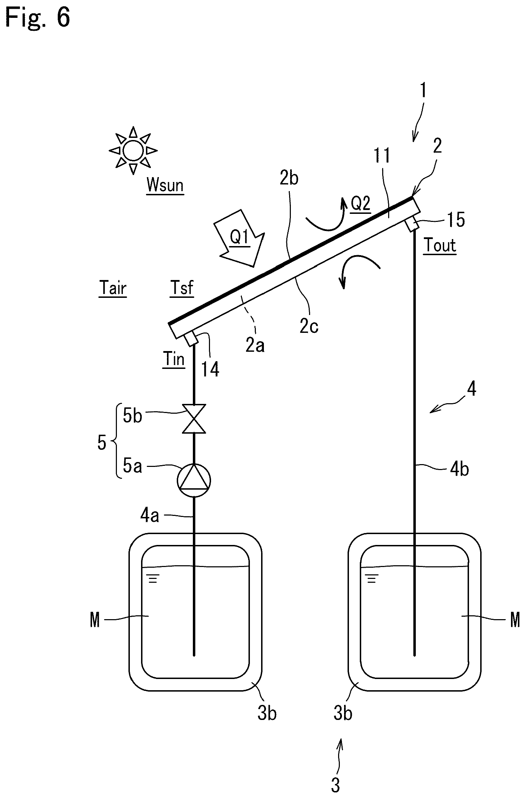

A solar light heat collection system 1 according to a second embodiment will now be described with reference to Fig. 6, focusing on the difference with respect to the first embodiment.

In this embodiment, the heat transfer medium tank 3 includes a first heat transfer medium tank 3a and a second heat transfer medium tank 3b that is separate from the first heat transfer medium tank 3a. The inflow line 4a connects the first heat transfer medium tank 3a to the inlet of the solar heat collection panel 2, and sends the heat transfer medium M from the first heat transfer medium tank 3a to the hollow portions 2a. The outflow line 4b connects the outlet of the solar heat collection panel 2 to the second heat transfer medium tank 3b, and sends the heat transfer medium M from the hollow portions 2a to the second heat transfer medium tank 3b.

In this case, because the heat transfer medium M having recovered heat is stored in the second heat transfer medium tank 3b, the temperature of the heat transfer medium M in the first heat transfer medium tank 3a is kept low. With this, because the panel temperature Tp can be maintained low, the amount of convective heat transfer Q2 can be maintained at a high positive value. In this manner, the amount of heat gain Q in the solar heat collection panel 2 can be increased.

(Third embodiment)

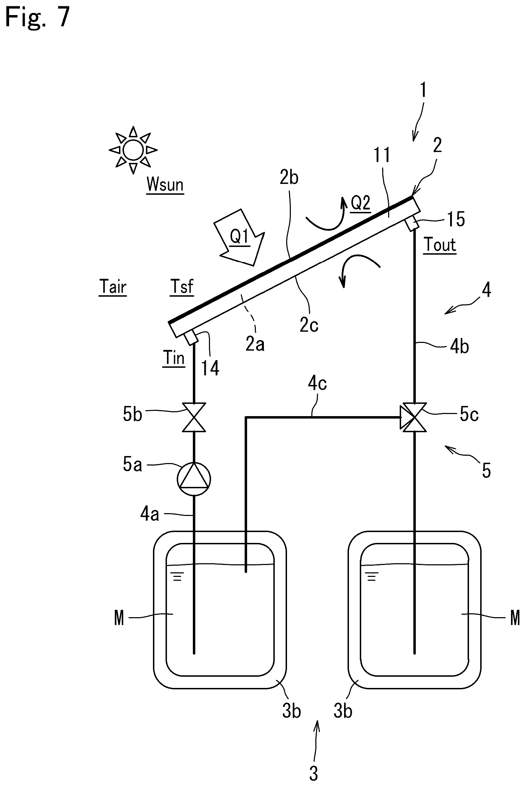

A solar light heat collection system 1 according to a third embodiment will now be described with reference to Fig. 7, focusing on the difference with respect to the second embodiment.

In this embodiment, too, the heat transfer medium tank 3 includes the first heat transfer medium tank 3a and the second heat transfer medium tank 3b that is separate from the first heat transfer medium tank 3a. The heat transfer medium circulation line 4 includes the inflow line 4a and the outflow line 4b, in the same manner as in the second embodiment. The heat transfer medium circulation line 4 further includes a return line 4c that branches out from the outflow line 4b, and via which the heat transfer medium M is returned to the first heat transfer medium tank 3a.

The heat transfer medium flow control mechanism 5 includes a three-way valve 5c provided to the point at which the return line 4c branches out from the outflow line 4b. The three-way valve 5c is an example of a direction switching mechanism that switches the direction for sending the heat transfer medium M. The three-way valve 5c switches between a state for sending the heat transfer medium M flowing out of the solar heat collection panel 2 to the second heat transfer medium tank 3b via the outflow line 4b, and a state for returning the heat transfer medium M flowing out of the solar heat collection panel 2 to the first heat transfer medium tank 3a via the return line 4c. The three-way valve 5c is an electromagnetic valve, and is connected to the control device 9. The switching between the states of the three-way valve 5c is controlled by the control device 9. Here, the control device 9 controls to switch the three-way valve 5c in such a manner that, when the value of the amount of heat gain Q (=Q1+Q2) calculated by the control device 9 is more than a reference value set by the user, the heat transfer medium M is returned to the first heat transfer medium tank 3a so as to increase the temperature of the heat transfer medium M, and when the value is less than the reference value, the heat transfer medium M is sent to the second heat transfer medium tank 3b so that the amount of collected heat is maximized.

According to this embodiment, it is possible to switch between a state for maintaining the temperature of the heat transfer medium M fed to the solar heat collection panel 2 low and a state for having the heat transfer medium M warmed, depending on the situation.

(Fourth Embodiment)

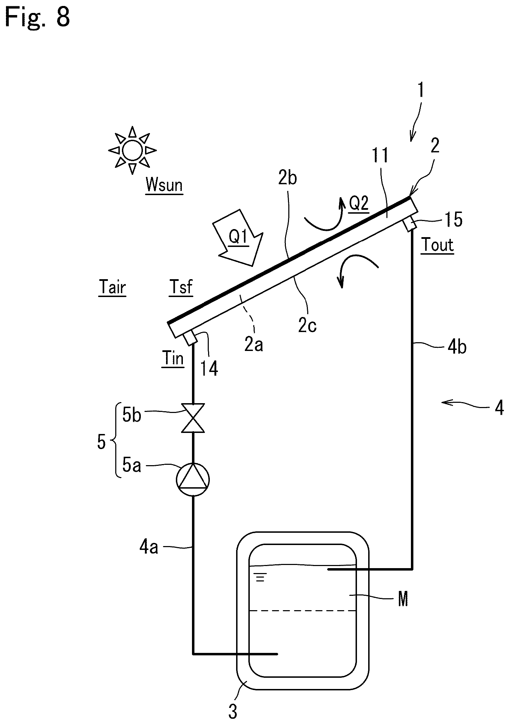

A solar light heat collection system 1 according to a fourth embodiment will now be described with reference to Fig. 8, focusing on the difference with respect to the first embodiment.

In this embodiment, the heat transfer medium tank 3 includes a single tank, in the same manner as in the first embodiment. The heat transfer medium tank 3 is, however, a stratified tank. That is, the heat transfer medium tank 3 has an outlet provided to a lower part, and an inlet provided to an upper part. The heat transfer medium M having a relatively low temperature is stored in the lower part, and the heat transfer medium M having recovered heat and having a relatively high temperature is stored in the upper part. No active convection takes place inside the heat transfer medium tank 3, so that the same heat transfer medium M having different temperatures is stored in two layers. The inflow line 4a connects the outlet of the heat transfer medium tank 3 to the inlet of the solar heat collection panel. The outflow line 4b connects the outlet of the solar heat collection panel 2 to the inlet of the heat transfer medium tank 3.

According to this embodiment, it is possible to maintain the amount of convective heat transfer Q2 at a high positive value, similarly to the second embodiment, without increasing the number of tanks, and to increase the amount of heat gain Q of the solar heat collection panel 2.

(Modifications)

Although the embodiments have been described so far, the configurations described above may be changed within the scope of the gist of present invention.

The panel body 11 of the solar heat collection panel 2 is not limited to the extruded member made from aluminum alloy, and may be manufactured using other materials and manufacturing methods. For example, the panel body 11 may be configured by stacking two aluminum plate members. In this case, at least one of the plate members is provided with grooves. The hollow portions can then be formed by closing the grooves with the other plate member. It is also possible to use steel or copper as a material other than aluminum.

It is also possible to provide a plurality of the solar heat collection panels 2. In such a case, the inflow line 4a connects the heat transfer medium tank 3 to the plurality of inlets in parallel, and the outflow line 4b connects the heat transfer medium tank 3 to the plurality of outlets in parallel.

A control device 80 may control to cause the heat transfer medium flow control mechanism 5 to adjust the flow rate of the heat transfer medium M on the basis of the amount of heat gain Q.

The solar light heat collection system 1 is applicable to any applications other than the greenhouse 90. For example, it may be installed in an architectural structure such as a building or a house, and used for generating hot water used in the architectural structure.

The present disclosure involves the following aspects:

(Aspect 1)

A solar light heat collection system comprising:

a solar heat collection panel that includes a hollow portion through which a heat transfer medium is circulated, a light-receiving unit that receives sunlight, and a non-insulated portion where convective heat transfer takes place with ambient air and that transfers solar radiant heat and convection heat from the ambient air to the heat transfer medium;

a heat transfer medium tank that stores the heat transfer medium;

a heat transfer medium circulation line that sends the heat transfer medium from the heat transfer medium tank to the solar heat collection panel, and that sends the heat transfer medium from the solar heat collection panel to the heat transfer medium tank;

a heat transfer medium flow control mechanism that performs at least one of switching and adjusting, the switching being switching between permitting and prohibiting circulation of the heat transfer medium through the heat transfer medium circulation line, and the adjusting being adjusting a flow rate of the heat transfer medium; and

a control device, configured to:

measure an amount of radiant heat input to the solar heat collection panel,

measure an amount of convective heat transfer between the solar heat collection panel and the ambient air, and

control the heat transfer medium flow control mechanism on a basis of the amount of radiant heat input and the amount of convective heat transfer.

(Aspect 2)

The solar light heat collection system according to Aspect 1, wherein

the amount of convective heat transfer is negative when the convection heat is transferred from the solar heat collection panel to the ambient air, and the control device controls to cause the heat transfer medium flow control mechanism to stop feeding the heat transfer medium to the solar heat collection panel when the amount of convective heat transfer is negative and the amount of radiant heat input is less than an absolute value of the amount of convective heat transfer.

(Aspect 3)

The solar light heat collection system according to Aspect 1 or 2, wherein the control device controls to cause the heat transfer medium flow control mechanism to feed the heat transfer medium to the solar heat collection panel when the amount of convective heat transfer is negative and the amount of radiant heat input is greater or equal to an absolute value of the amount of convective heat transfer.

(Aspect 4)

The solar light heat collection system according to any one of Aspects 1 to 3, wherein the control device controls to cause the heat transfer medium flow control mechanism to feed the heat transfer medium to the solar heat collection panel when the amount of convective heat transfer is positive.

(Aspect 5)

The solar light heat collection system according to any one of Aspects 1 to 4, further comprising a pyranometer that measures an amount of global solar radiation, wherein the control device measures the amount of radiant heat input as an amount of heat per unit time, on a basis of the amount of global solar radiation measured by the pyranometer and a surface area of the light-receiving unit.

(Aspect 6)

The solar light heat collection system according to any one of Aspects 1 to 5, further comprising:

an outdoor temperature sensor that measures a temperature of the ambient air around the solar heat collection panel;
a panel temperature sensor that measures a temperature in the solar heat collection panel, wherein the control device measures the amount of convective heat transfer as an amount of heat per unit time, on a basis of a difference between the temperatures measured by the outdoor temperature sensor and the panel temperature sensor, an outer surface area of the non-insulated portion, and a convection heat transfer coefficient of the non-insulated portion.

(Aspect 7)

The solar light heat collection system according to Aspect 6, wherein the panel temperature sensor includes at least one of a surface temperature sensor that measures a surface temperature of the non-insulated portion, an inlet temperature sensor that measures a temperature near an inlet of the hollow portion, and an outlet temperature sensor that measures a temperature near an outlet of the hollow portion.

(Aspect 8)

The solar light heat collection system according to any one of Aspects 1 to 7, wherein the heat transfer medium tank includes a first heat transfer medium tank and a second heat transfer medium tank that is separate from the first heat transfer medium tank, and
the heat transfer medium circulation line includes an inflow line that sends the heat transfer medium from the first heat transfer medium tank to the hollow portion, and an outflow line that sends the heat transfer medium from the hollow portion to the second heat transfer medium tank.

(Aspect 9)

The solar light heat collection system according to Aspect 8, wherein

the heat transfer medium circulation line further includes a return line that branches out from the outflow line and via which the heat transfer medium is returned to the first heat transfer medium tank, and
the heat transfer medium flow control mechanism includes a direction switching mechanism that switches between a state for sending the heat transfer medium to the second heat transfer medium tank via the outflow line and a state for returning the heat transfer medium to the first heat transfer medium tank via the return line.

(Aspect 10)

The solar light heat collection system according to any one of Aspects 1 to 7, wherein

the heat transfer medium tank is a stratified tank having an outlet provided to a lower part and an inlet provided to an upper part, and
the heat transfer medium circulation line includes an inflow line connecting the outlet of the heat transfer medium tank to the hollow portion and an outflow line connecting the hollow portion to the inlet of the heat transfer medium tank.

This application claims benefit of priority based on to Japanese Patent Application No. 2023-188416 filed on November 2, 2023, the entire content of which is incorporated herein by reference.

REFERENCE SIGNS LIST

| | |
|---|---|
| 1 | solar light heat collection system |
| 2 | solar heat collection panel |
| 2a | hollow portion |
| 2b | light-receiving unit |
| 2c | non-insulated portion |
| 3 | heat transfer medium tank |
| 3a | first heat transfer medium tank |
| 3b | second heat transfer medium tank |
| 4 | heat transfer medium circulation line |
| 4a | inflow line |
| 4b | outflow line |
| 4c | return line |
| 5 | heat transfer medium flow control mechanism |
| 5a | pump |
| 5b | valve |
| 5c | three-way valve |
| 6 | pyranometer |
| 7 | outdoor temperature sensor |
| 8 | panel temperature sensor |
| 8a | surface temperature sensor |
| 8b | inlet temperature sensor |
| 8c | outlet temperature sensor |
| 9 | control device |
| 11 | panel body |
| 11a | first main wall |
| 11b | second main wall |
| 11c | side wall |
| 11d | partitioning wall |
| 12 | first header |
| 13 | second header |
| 12a,13a | lid plate |
| 12b,13b | peripheral wall |
| 12c,13c | inner space |
| 14 | inlet |
| 15 | outlet |
| 90 | greenhouse |
| 91 | framework |
| 91a | post |
| 91b | beam |
| 91c | roof |
| 98 | growing medium |
| 99 | plant |
| Ap | outer surface area |
| Asun | light-receiving area |
| M | heat transfer medium |
| Q1 | amount of radiant heat input |
| Q2 | amount of convective heat transfer |
| Tair | outdoor temperature |
| Tp | panel temperature |
| Tin | inlet temperature |
| Tout | outlet temperature |
| Tsf | surface temperature |
| Wsun | amount of global solar radiation |
| $\alpha$ | emissivity |
| $\mu$ | convection heat transfer coefficient |

**Claims**

1. A solar light heat collection system comprising:

   a solar heat collection panel that includes a hollow portion through which a heat transfer medium is circulated, a light-receiving unit that receives sunlight, and a non-insulated portion where convective heat transfer takes place with ambient air and that transfers solar radiant heat and convection heat from the ambient air to the heat transfer medium;
   a heat transfer medium tank that stores the heat transfer medium;
   a heat transfer medium circulation line that sends the heat transfer medium from the heat transfer medium tank to the solar heat collection panel, and that sends the heat transfer medium from the solar heat collection panel to the heat transfer medium tank;
   a heat transfer medium flow control mechanism that performs at least one of switching and adjusting, the switching being switching between permitting and prohibiting circulation of the heat transfer medium through the heat transfer medium circulation line, and the adjusting being adjusting a flow rate of the heat transfer medium; and
   a control device, configured to:

      measure an amount of radiant heat input to the solar heat collection panel,
      measure an amount of convective heat transfer between the solar heat collection panel and the ambient air, and
      control the heat transfer medium flow control mechanism on a basis of the amount of radiant heat input and the amount of convective heat transfer.

2. The solar light heat collection system according to claim 1, wherein

   the amount of convective heat transfer is negative when the convection heat is transferred from the solar heat collection panel to the ambient air, and
   the control device controls to cause the heat transfer medium flow control mechanism to stop feeding the heat transfer medium to the solar heat collection panel when the amount of convective heat transfer is negative and the amount of radiant heat input is less than an absolute value of the amount of convective heat transfer.

3. The solar light heat collection system according to claim 2, wherein the control device controls to cause the heat transfer medium flow control mechanism to feed the heat transfer medium to the solar heat collection panel when the amount of convective heat transfer is negative and the amount of radiant heat input is greater or equal to an absolute value of the amount of convective heat transfer.

4. The solar light heat collection system according to claim 2, wherein the control device controls to cause the heat transfer medium flow control mechanism to feed the heat transfer medium to the solar heat collection panel when the amount of convective heat transfer is positive.

5. The solar light heat collection system according to any one of claims 1 to 4, further comprising a pyranometer that measures an amount of global solar radiation, wherein the control device measures the amount of radiant heat input as an amount of heat per unit time, on a basis of the amount of global solar radiation measured by the pyranometer and a surface area of the light-receiving unit.

6. The solar light heat collection system according to any one of claims 1 to 4, further comprising:

an outdoor temperature sensor that measures a temperature of the ambient air around the solar heat collection panel;
a panel temperature sensor that measures a temperature in the solar heat collection panel, wherein
the control device measures the amount of convective heat transfer as an amount of heat per unit time, on a basis of a difference between the temperatures measured by the outdoor temperature sensor and the panel temperature sensor, an outer surface area of the non-insulated portion, and a convection heat transfer coefficient of the non-insulated portion.

7. The solar light heat collection system according to claim 6, wherein the panel temperature sensor includes at least one of a surface temperature sensor that measures a surface temperature of the non-insulated portion, an inlet temperature sensor that measures a temperature near an inlet of the hollow portion, and an outlet temperature sensor that measures a temperature near an outlet of the hollow portion.

8. The solar light heat collection system according to any one of claims 1 to 4, wherein the heat transfer medium tank includes a first heat transfer medium tank and a second heat transfer medium tank that is separate from the first heat transfer medium tank, and
the heat transfer medium circulation line includes an inflow line that sends the heat transfer medium from the first heat transfer medium tank to the hollow portion, and an outflow line that sends the heat transfer medium from the hollow portion to the second heat transfer medium tank.

9. The solar light heat collection system according to claim 8, wherein

the heat transfer medium circulation line further includes a return line that branches out from the outflow line and via which the heat transfer medium is returned to the first heat transfer medium tank, and
the heat transfer medium flow control mechanism includes a direction switching mechanism that switches between a state for sending the heat transfer medium to the second heat transfer medium tank via the outflow line and a state for returning the heat transfer medium to the first heat transfer medium tank via the return line.

10. The solar light heat collection system according to any one of claims 1 to 4, wherein

the heat transfer medium tank is a stratified tank having an outlet provided to a lower part and an inlet provided to an upper part, and
the heat transfer medium circulation line includes an inflow line connecting the outlet of the heat transfer medium tank to the hollow portion and an outflow line connecting the hollow portion to the inlet of the heat transfer medium tank.

Fig. 1

Fig. 2A

Fig. 2B

Fig. 2C

# Fig. 3

Fig. 4

```
                    ┌───────────┐
                    │   START   │
                    └─────┬─────┘
                          │
        ┌─────────────────┴──────────────────────────────┐
        │ MEASURE FOLLOWINGS:                             │
   S1   │ · AMOUNT OF GLOBAL SOLAR RADIATION Wsun          │
        │ · OUTDOOR TEMPERATURE Tair                      │
        │ · PANEL TEMPERATURE Tp                          │
        └─────────────────┬──────────────────────────────┘
                          │
        ┌─────────────────┴──────────────────────────────┐
        │ CALCULATE FOLLOWINGS:                           │
   S2   │ · AMOUNT OF RADIANT HEAT INPUT Q1               │
        │ · AMOUNT OF CONVECTIVE HEAT TRANSFER Q2         │
        └─────────────────┬──────────────────────────────┘
                          │
                          │                    YES
  S3a    <     Q2 ≧ 0 ?     >─────────────────────┐
                          │ NO                     │
                          │                        │
                          │                    YES │
  S3b    <   |Q1| ≧ |Q2| ?  >──────────────────┐  │
                          │ NO                  │  │
        ┌─────────────────┴──────┐   ┌─────────┴──┴────────────┐
        │    CIRCULATION OF       │   │    CIRCULATION OF        │
   S5   │ HEAT TRANSFER MEDIUM:   │S4 │ HEAT TRANSFER MEDIUM:    │
        │        STOP             │   │      CONTINUE            │
        └─────────────────┬──────┘   └─────────────┬───────────┘
                          │◄───────────────────────┘
                    ┌─────┴─────┐
                    │    END    │
                    └───────────┘
```

## Fig. 5

Fig. 6

Fig. 7

Fig. 8

## INTERNATIONAL SEARCH REPORT

| International application No. |
|---|
| **PCT/JP2024/029813** |

### A. CLASSIFICATION OF SUBJECT MATTER

*F24H 1/00*(2022.01)i; *F24H 1/18*(2022.01)i; *F24H 15/215*(2022.01)i; *F24H 15/219*(2022.01)i; *F24H 15/258*(2022.01)i; *F24H 15/31*(2022.01)i; *F24H 15/335*(2022.01)i; *F24S 50/80*(2018.01)i; *F24S 90/00*(2018.01)i
FI:   F24H1/00 621C; F24H1/18 G; F24H15/215; F24H15/219; F24H15/258; F24H15/335; F24H15/31; F24S50/80; F24S90/00 100

According to International Patent Classification (IPC) or to both national classification and IPC

### B. FIELDS SEARCHED

Minimum documentation searched (classification system followed by classification symbols)

F24H1/00; F24H1/18; F24H15/31; F24H15/215; F24H15/219; F24H15/258; F24H15/335; F24S50/80; F24S90/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 58-43359 A (FUJI DENKI SEIZO KK) 14 March 1983 (1983-03-14) specification, p. 1, right column, line 5 to p. 4, upper right column, line 7, fig. 1-3 | 1-7, 10 |
| Y | | 8-9 |
| Y | JP 8-94190 A (SHIRAI SHOJI KK) 12 April 1996 (1996-04-12) paragraphs [0026]-[0054], fig. 1-5 | 8-9 |
| A | JP 2017-166783 A (SHARP KABUSHIKI KAISHA) 21 September 2017 (2017-09-21) entire text, all drawings | 1-10 |
| A | JP 2008-111650 A (MATSUSHITA ELECTRIC INDUSTRIAL CO., LTD.) 15 May 2008 (2008-05-15) entire text, all drawings | 1-10 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 September 2024** | **08 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/029813**

| Patent document<br>cited in search report | Publication date<br>(day/month/year) | Patent family member(s) | Publication date<br>(day/month/year) |
|---|---|---|---|
| JP      58-43359      A | 14 March 1983 | (Family: none) | |
| JP      8-94190      A | 12 April 1996 | WO      1996/009501      A1<br>specification, p. 4, line 27 to p.<br>10, line 29, fig. 1-5<br>EP      794395      A1<br>CN      1161081      A | |
| JP      2017-166783      A | 21 September 2017 | (Family: none) | |
| JP      2008-111650      A | 15 May 2008 | (Family: none) | |

Form PCT/ISA/210 (patent family annex) (July 2022)

**REFERENCES CITED IN THE DESCRIPTION**

**Patent documents cited in the description**

- JP S58102062 A
- JP 2023188416 A